# EUROPEAN PATENT APPLICATION

(11) **EP 1 632 352 A2**
(43) Date of publication of application: **08.03.2006**
(21) Application number: 05018553.7
(22) Date of filing: 26.08.2005
(51) Int. Cl.: B41F 33/00, B41F 7/32

(54) **Apparatus and method for improving the characteristics of wetting water in offset printing machines**

(30) Priority: 03.09.2004 IT MI20041698
(71) Applicant: Ecografica S.r.l., 22046 Merone (Como) (IT)
(72) Inventor: Carrierro, Antonio, 22046 Merone (Como) (IT)
(74) Representative: Cicogna, Franco

(57) **Abstract**

The present invention relates to a method and apparatus (1) for optimizing the characteristics of wetting water in offset and roto-offset printing machines, by a system for separating and trapping inks, foam and printing residues, (such as paper, solvents and the like) coming from the return water to the printing elements, to be then conveyed, by gravity falling or through a reconveying station, to an existing recirculating unit (3).

## Description

### BACKGROUND OF THE INVENTION

The present invention relates to an apparatus and method for improving or optimizing the characteristics of wetting water in offset and roto-offset printing machines.

In an offset printing method, the printing operations are performed by a plate cylinder, cooperating with a blanket cylinder, therebetween the material to be printed upon is caused to pass, said material being conventionally in a sheet form (for the offset printing) or in a coil form (for the roto-offset printing).

In such a method, it is very important to optimize the wetting characteristics of the material to be printed upon, to provide a high printing quality.

In fact, as is known, the printing wetting water must have target pH and conductivity values and, moreover, it must be held at a constant preset temperature.

The above mentioned functions are conventionally performed by refrigerating devices, the so-called "recirculating" apparata.

### SUMMARY OF THE INVENTION

Accordingly, the aim of the present invention is to provide such an apparatus, in particular an apparatus already disclosed in a prior Italian Patent Application No. MI20004A 000484, in the name of the same Applicant, for improving or optimizing the characteristics of wetting water in offset printing, allowing to automatically control or monitor the wetting water pH and conductivity values, in a fully independent manner.

Within the scope of the above mentioned aim, a main object of the present invention is to provide such an apparatus which allows to perform printing operations with a very high efficiency and stability.

Yet another object of the present invention is to provide such an apparatus in which it is not necessary to periodically replace the printing wetting water.

According to one aspect of the present invention, the above mentioned aim and objects, as well as yet other objects, which will become more apparent hereinafter, are achieved by an apparatus for improving characteristics of wetting water in offset printing machines, characterized in that said apparatus comprises coarse pre-filtering means, separating means defining one or more separating basins, ink recovering means arranged at a top of one or more of said separating basins, and empting valves.

According to a further aspect of the present invention, the above mentioned aim and objects, as well as yet other objects, which will become more apparent hereinafter, are further achieved by a method for improving the characteristics of wetting water in offset printing machines, characterized in that said method comprises the steps of separating and trapping inks, foam and printing residues such as paper, solvents and so on, coming from return water returning from printing elements, to be conveyed, by a gravity fall or reconveying stations, to a recirculating unit.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:
Figure 1 is a schematic view of an offset printing machine including the apparatus according to the present invention;
Figure 2 is a schematic view of an offset printing machine including an apparatus according to a further aspect of the present invention;
Figure 3 is a schematic side elevation view of the apparatus according to the present invention, as applied to the printing machine shown in figure 1;
Figure 4 is a further schematic side elevation view of the apparatus according to a further aspect of the present invention, as applied to the printing machine shown in figure 2;

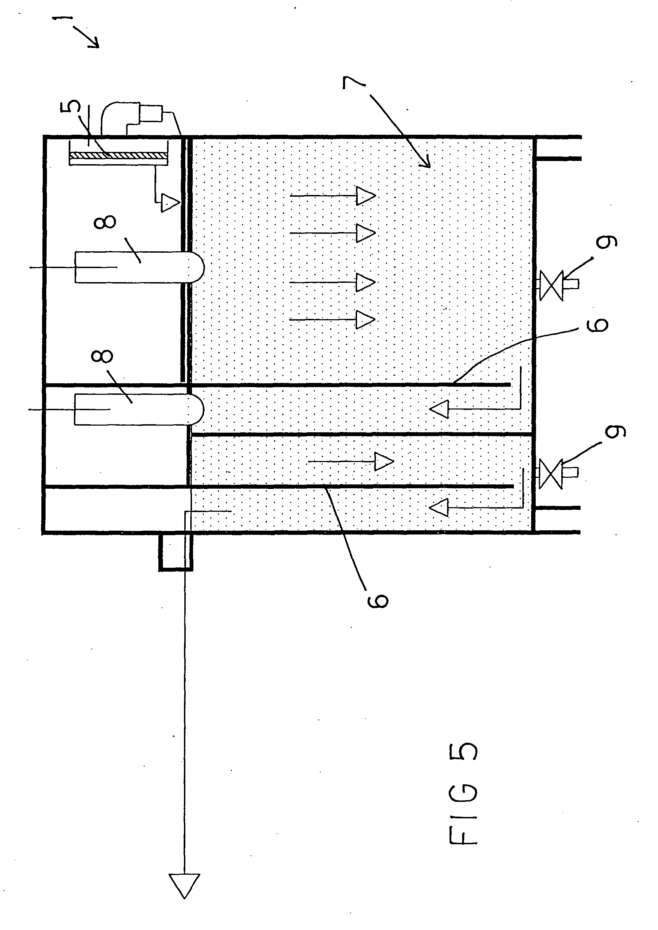

Figure 5 is a further elevation view schematically showing the main components of the apparatus according to the present invention;
Figures 6-8 are further elevation views of the subject apparatus, specifically showing operating steps for recovering residues, by an overflowing type of method;
Figure 9 is an elevation and top plan view showing a rectangular cross-section apparatus; and
Figure 10 is a further elevation and top plan view illustrating a circular cross-section apparatus.

### DESCRIPTION OF THE PREFERRED EMBODIMENTS

With reference to the number references of the above mentioned figures, the apparatus according to the present invention, which has been generally indicated by the reference number 1, is applied to an offset printing machine, generally indicated by the reference number 110, which comprises, in a per se known manner, a plurality of printing units 2, a recirculating device 3 and an apparatus 4 for improving or optimizing the wetting water, in particular of a type already discloses in a prior Italian Patent Application No. MI2004A 000484 in the name of the same Applicant.

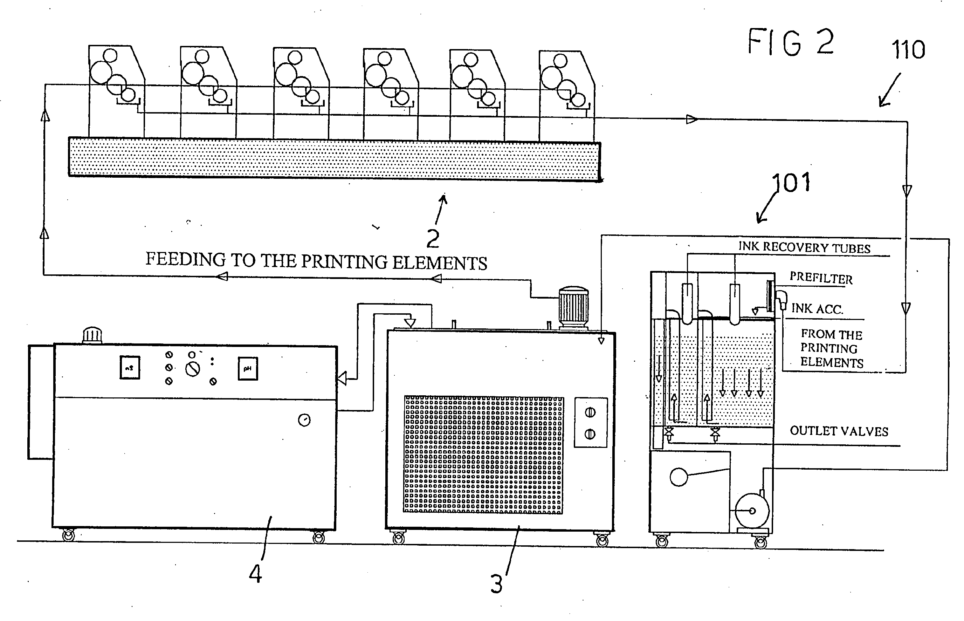

In the offset printing machine shown in figure 2, the printing wetting water is continuously cooled by the recirculating device 3 which comprises a refrigerating assembly.

More specifically, the liquid, after having being suitably refrigerated, is delivered to the printing unit 2 and then being conveyed to the apparatus 1 according to the present invention.

This apparatus 1 essentially comprises a coarse pre-filtering system, constituted by a pre-filter 5, a plurality of separating walls 6 defining one or more processing basins, generally indicated by the reference number 7, ink recovery tubes 8, for recovering ink, said tube being arranged on the top of the processing basins 7, and empting or outlet valves 9.

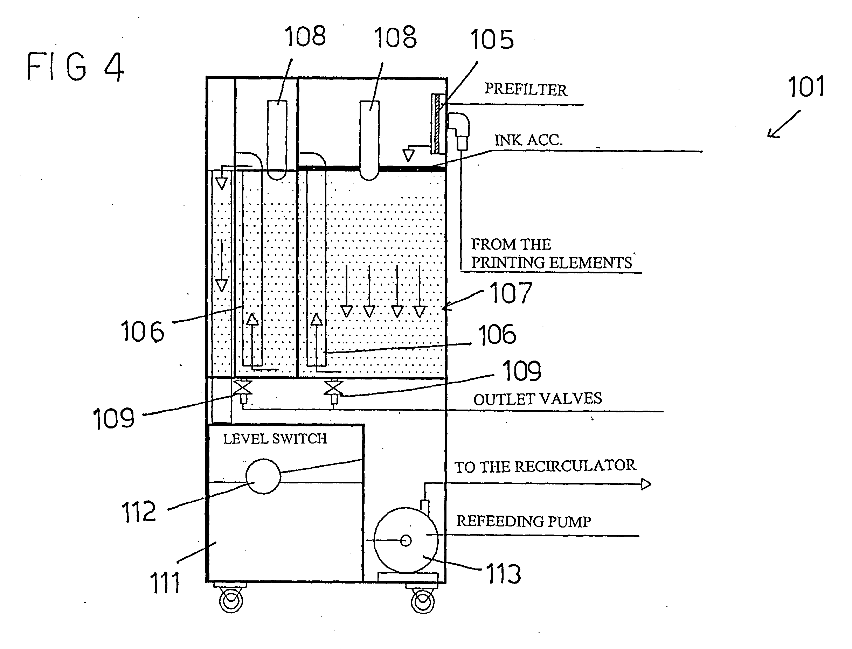

According to' a modified embodiment of the invention, the apparatus, schematically shown in figures 2 and 4 and generally indicated by the reference number 101, essentially comprises a coarse pre-filtering system, including a pre-filter 105, a series of pipes 106 defining one or more processing basins, generally indicated by the reference number 107, ink recovery pipes 108, arranged on the top of said processing basins 107, empting valves 109, a collecting tank 111 including a level sensor 112 and a reconveying pump 113.

The system according to the present invention operates as follows.

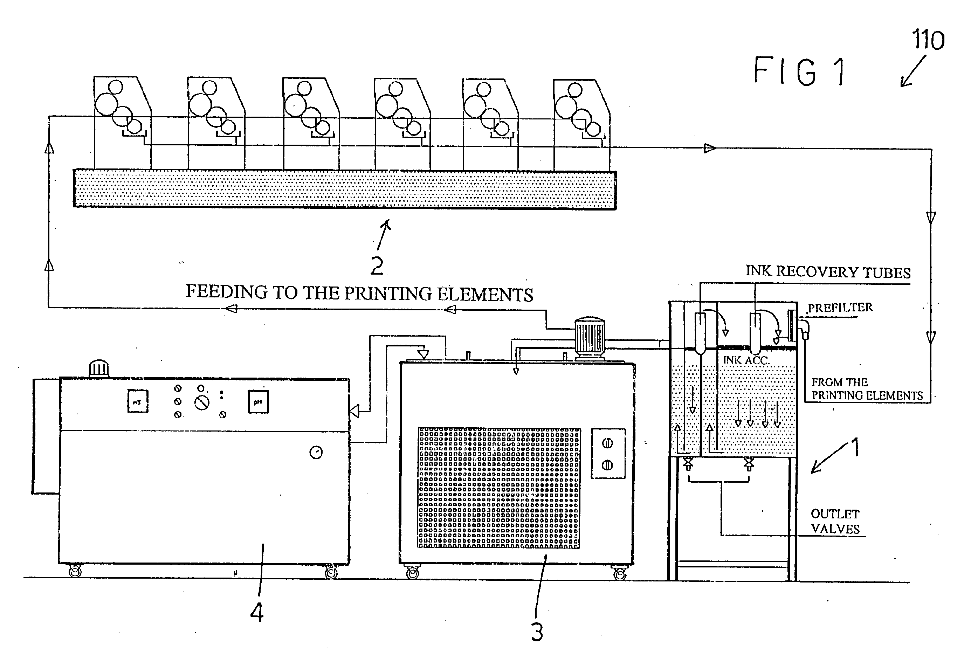

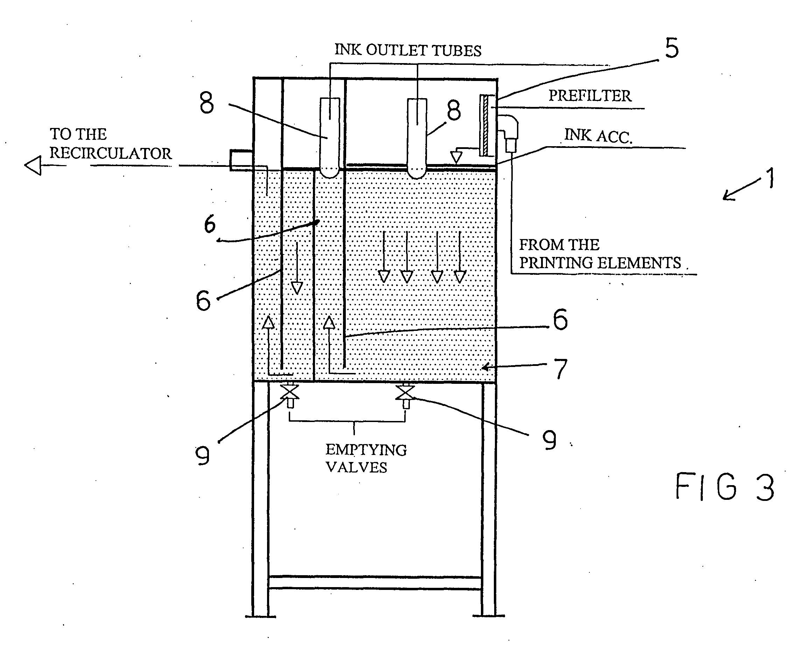

The return water, coming from the printing units 2 is conveyed to the ink separating device, by passing through the coarse pre-filtering system 5, 105 to then flow, through a forced flowing path, including the separating walls 6 (figures 1 and 3), or pipes 106 (figures 2 and 4), to the following processing basins 7 and 107, as suitable designed, where ink and printing residues, which tend to float, are trapped.

The thus processed water is then sent by gravity falling to the apparatus 1 or is reconveyed by a pump 113, in the apparatus 101, to the recirculating device 3 to be again reconveyed to the printing units 2.

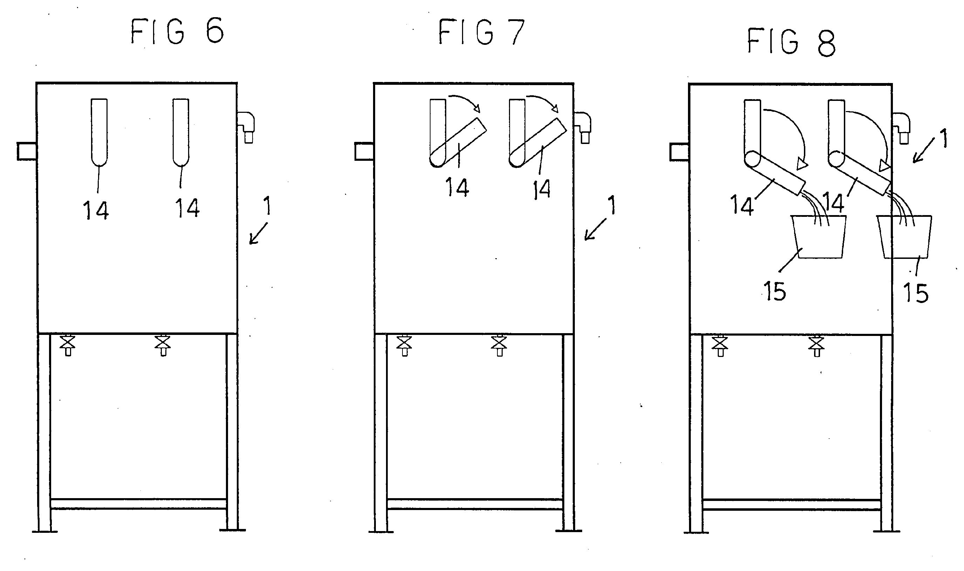

Thus, periodically, the operator can recover the residues or waste materials accumulated in the separating device basins, by an overflowing type of operation, i.e. by a simple downward turning of one or more pipes 14, as is schematically shown in figures 6-8, according to a preset operating sequence, said pipes being applied to the outside of the separating device at a level adapted to discharge only the top portion of the ink and printing residue holding liquid, thereby collecting it in a vessel 15 for the subsequent disposal of thereof.

For fully empting the system, and accordingly to perform an extraordinary maintenance, are used the bottom empting valves 9 or 109.

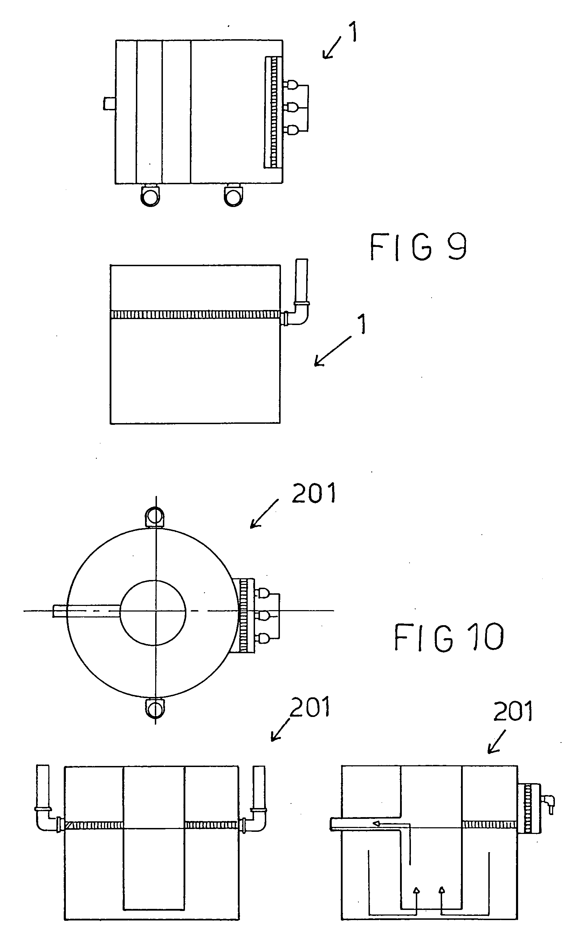

Figures 9 and 10 show two possible geometric configurations of the apparatus, respectively a rectangular cross-section configuration, indicated by the reference number 1, and a circular cross-section configuration, generally indicated by the reference number 201.

It is practically found that the invention fully achieves the intended aim and objects.

In fact, the invention provides an apparatus in which it is not necessary to periodically replace the wetting water, since it is continuously and extraordinarily held in a clear condition.

In practicing the invention, the used materials, as well as the contingent size and shapes, can be any, depending on requirements.

## Claims

1. An apparatus for improving characteristics of wetting water in offset printing machines, **characterized in that** said apparatus comprises coarse pre-filtering means, separating means defining one or more separating basins, ink recovering means arranged at a top of one or more of said separating basins, and empting valves.

2. An apparatus according to claim 1, **characterized in that** said coarse pre-filtering means comprise a pre-filter.

3. An apparatus according to claim 1, **characterized in that** said separating means comprise one or more separating walls.

4. An apparatus according to claim 1, **characterized in that** said separating means comprise one or more pipes.

5. An apparatus according to claim 1, **characterized in that** said apparatus further comprises a collecting tank.

6. An apparatus according to claim 5, **characterized in that** said collecting tank comprises a level sensor therein.

7. An apparatus according to claim 1, **characterized in that** said apparatus further comprises a reconveying pump.

8. An apparatus according to claim 1, **characterized in that** in said apparatus, the return water, coming from the printing machine printing units is conveyed to said separating means, by passing through said coarse pre-filtering means and then flowing, through a forced conveying path, including said separating means, to following processing basins where floating printing ink and residue materials are trapped.

9. An apparatus according to claim 8, **characterized in that** the processed water is sent, by gravity falling or reconveying it by a pump, in said apparatus to said recirculating device to be again reconveyed to the printing units.

10. An apparatus according to claim 8, **characterized in that** said residue materials accumulated in said processing basin or basins of said separating device are recovered, by overflowing, by causing one or more pipes to downward turn, said pipes being applied on the outside of said separating device at a level allowing a discharging of exclusively the top surface of the printing ink and residue holding liquid, to collect said liquid in a collecting vessel for disposing of said liquid.

11. An apparatus according to claim 1, **characterized in that** said apparatus comprises a plurality of bottom empting valves to fully empty contents of said apparatus.

12. A method for improving the characteristics of wetting water in offset printing machines, **characterized in that** said method comprises the steps of separating and trapping printing inks, foam and residues such as paper, solvents and so on, coming from return water returning from said printing elements, to be reconveyed, by gravity falling or through a reconveying stations to a recirculating unit.
